# EUROPÄISCHE PATENTSCHRIFT

(11) **EP 1 056 785 B1**
(45) Veröffentlichungstag und Bekanntmachung des Hinweises auf die Patenterteilung: **22.12.2004**
(21) Anmeldenummer: 99913145.1
(22) Anmeldetag: 05.02.1999
(51) Int. Cl.: C08F 4/646, C08F 4/02

(54) **VERFAHREN ZUR HERSTELLUNG EINES GETRÄGERTEN KATALYSATORSYSTEMS**
METHOD FOR PRODUCING A SUPPORTED CATALYST SYSTEM
PROCEDE DE FABRICATION D'UN SYSTEME CATALYSEUR SUR SUPPORT

(30) Priorität: 17.02.1998 DE 19806435
(43) Veröffentlichungstag der Anmeldung: 06.12.2000
(73) Patentinhaber: Basell Polyolefine GmbH, 50389 Wesseling (DE)
(72) Erfinder: KRISTEN, Marc, Oliver, D-67117 Limburgerhof (DE); DELOUX, Laurent, D-69115 Heidelberg (DE); KÖLLE, Peter, D-67098 Bad Dürkheim (DE); MOLL, Ulrich, D-67487 St Martin (DE); RIEF, Ursula, D-68542 Heddesheim (DE)
(86) Internationale Anmeldenummer: PCT/EP1999/000784
(87) Internationale Veröffentlichungsnummer: WO 1999/042493

(56) Entgegenhaltungen:
- EP-A- 0 768 320
- WO-A-95/07939
- DE-A- 19 606 165

## Beschreibung

Gegenstand der vorliegenden Erfindung ist ein Verfahren zur Herstellung eines geträgerten Katalysatorsystems, wobei man in einem ersten Schritt ein organisches oder anorganisches Trägermaterial in Gegenwart eines inerten Lösungsmittels mit einer Metallverbindung der allgemeinen Formel I

M¹(R¹)ᵣ(R²)ₛ(R³)ₜ(R⁴)ᵤ I

in der
- M¹: ein Alkali-, ein Erdalkalimetall oder ein Metall der III. oder IV. Hauptgruppe des Periodensystems bedeutet,
- R¹: wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R² bis R⁴: Wasserstoff, Halogen, C₁- bis C₁₀-Alkyl, C₆- bis C₁₅-Aryl, Alkylaryl, Arylalkyl, Alkoxy, Aryloxy oder Dialkylamino mit jeweils 1 bis 10 C-Atomen im Alkylrest und 6 bis 20 C-Atomen im Arylrest,
- r: eine ganze Zahl von 1 bis 4
und
- s, t und u: ganze zahlen von 0 bis 3 bedeuten, wobei die Summe r+s+t+u der Wertigkeit von M¹ entspricht,
und in einem folgenden Schritt die so erhaltene Suspension mit einem Metallocenkomplex und einer metalloceniumioneribildenden Verbindung umsetzt.

Zur Polymerisation von Olefinen gewinnen Metallocenkatalysator-Systeme mehr und mehr an Bedeutung. Besonders für Polymerisationsverfahren in der Gasphase werden dazu geträgerte Katalysatorsysteme eingesetzt. Die Herstellung verschiedener geträgerter Katalysatorsysteme ist daher seit langem bekannt.

Wird als Trägermaterial ein anorganisches Trägermaterial wie Kieselgel eingesetzt, ist es meist erforderlich, reaktive Gruppen wie Hydroxylgruppen auf der Oberfläche des Trägers, welche mit dem Zentralatom des Katalysatorkomplexes reagieren können, zu modifizieren. Insbesondere bei der Trägerung von Metallocenkatalysatorkomplexen ist eine solche Oberflächenmodifikation erforderlich.

Verfahren zur Trägerung von Metallocenen auf anorganischen Trägermaterialien, bei denen das Trägermaterial vor der Umsetzung mit dem Metallocen und gegebenenfalls weiteren Cokatalysatoren mit einer metallorganischen Verbindung umgesetzt wird, sind bekannt. Solche Verfahren werden beispielsweise in WO 91/09882, WO 94/03506, WO 95/15815, WO 95/14044 und DE-A1-19606167 beschrieben. Bei allen diesen Verfahren wird jedoch das mit der metallorganischen Verbindung modifizierte Kieselgel von der Reaktionslösung - meist durch Filtration - befreit, bevor die Umsetzung mit den weiteren Katalysatorkomponenten erfolgt. Diese Verfahrensweise ist jedoch umständlich, erfordert zusätzlichen apparativen Aufwand und beeinträchtigt daher die Wirtschaftlichkeit des Verfahrens.

Der vorliegenden Erfindung lag nun die Aufgabe zugrunde, ein Verfahren zur Herstellung geträgerter Katalysatorsysteme zu finden, welches diese Nachteile nicht mehr aufweist und auf einfachere Weise zu einem geträgerten Katalysatorsystem vergleichbarer Produktivität und Qualität führt.

Demgemäß wurde ein Verfahren zur Herstellung eines geträgerten Katalysatorsystems gefunden, wobei man in einem ersten Schritt ein anorganisches Trägermaterial in Gegenwart eines inerten Lösungsmittels mit einer oben beschriebenen Metallverbindung der allgemeinen Formel I umsetzt und in einem folgenden Schritt die so erhaltene Suspension mit einem Metallocenkomplex der Formel III und einer metalloceniumbildenden Verbindung, welche eine Koordinationskomplexverbindung ist, ausgewählt aus der Gruppe der starken, neutralen Lewissäuren, der ionischen Verbindungen mit lewissauren Kationen und der ionischen Verbindungen mit Brönsted-Säuren als Kationen umsetzt, welches Verfahren dadurch gekennzeichnet ist, daß man nach dem ersten Schritt das Lösungsmittel nicht entfernt und ohne Isolierung des so erhaltenen vorbehandelten Trägermaterials den folgenden Schritt durchführt.

Als Trägermaterialien werden vorzugsweise anorganische Feststoffe eingesetzt, deren Teilchendurchmesser im Bereich von 1 bis 200 µm liegen, insbesondere 30 bis 70 µm.

Geeignete Trägermaterialien sind vorzugsweise Kieselgele, besonders bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind also Alumosilikate oder Siliciumdioxid. Derartige Produkte sind im Handel erhältlich, z.B. Silica Gel 332 der Fa. Grace oder ES70X der Fa. Cosfield.

Diese Trägermaterialien können zur Entfernung des adsorbierten Wassers einer thermischen Behandlung unterzogen werden oder auch calciniert werden, wobei bevorzugt eine Behandlung bei 80 - 200°C, vorzugsweise bei 100 - 150°C, durchgeführt wird.

Andere anorganische verbindungen wie Al₂O₃ oder MgCl₂ oder diese Verbindungen enthaltende Mischungen können ebenfalls als Trägermaterialien eingesetzt werden.

Von den Metallverbindungen der allgemeinen Formel I sind diejenigen bevorzugt, bei denen M¹ für ein Metall der III. Hauptgruppe des Periodensystems steht, insbesondere für Aluminium, R¹ für C₁- bis C₁₀-Alkyl und R² bis R⁴ für C₁- bis C₁₀-Alkyl. Für den besonders bevorzugten Fall, daß M¹ für Aluminium steht, ist u Null. Die Reste R¹ bis R³ weisen vorteilhaft die gleiche Bedeutung auf, vorzugsweise Methyl, Ethyl, iso-Butyl oder Hexyl, bevorzugt iso-Butyl.

Vorzugsweise wird die Metallverbindung der allgemeinen Formel I als Lösung zu einer Suspension des Trägers gegeben. Als Lösungs- bzw. Suspensionsmittel sind insbesondere Kohlenwasserstoffe wie Toluol oder Heptan geeignet. Besonders bevorzugt sind Lösungsmittel, in denen der Metallocenkomplex gut löslich ist. Die Menge an Metallverbindung I kann in weiten Grenzen variieren, die Mindestmenge richtet sich nach der Anzahl der Hydroxygruppen des Trägers. Auch ohne Abtrennung des vorbehandelten Trägermaterials nach diesem ersten Verfahrensschritt führen kleine Variationen des Verhältnisses Träger zu Verbindung I nur zu geringfügigen Leistungsunterschieden des Katalysatorsystems. Je nach Art des Trägermaterials sollte jedoch dieses Verhältnis durch Vorversuche optimiert werden. Die Temperaturen, Reaktionszeiten und Drücke sind an sich unkritisch, bevorzugt sind Temperaturen von -20 bis 100°C und Reaktionszeiten von 0,1 bis 48 Stunden.

Die so erhaltene Suspension wird nun in einem folgenden Schritt ohne Isolierung und Abtrennen des Lösungsmittels mit einem Metallocenkomplex und einer metalloceniumionenbildenden Verbindung umgesetzt.

Metallocenkomplexe sind folgende Verbindungen der allgemeinen Formel III: 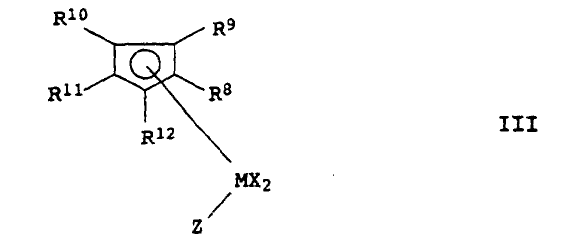 in der die Substituenten folgende Bedeutung haben:
- M: Titan, Zirkonium, Hafnium, Vanadium, Niob oder Tantal,
- X: Fluor, Chlor, Brom, Iod, Wasserstoff oder C₁- bis C₁₀-Alkyl,
- R⁸ bis R¹²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅ -Aryl oder Arylalkyl, wobei gegebenenfalls auch zwei benachbarte Reste gemeinsam für 4 bis 15 C-Atome aufweisende cyclische Gruppen stehen können oder Si(R¹³)₃ mit
- R¹³: C₁- bis C₁₀-Alkyl, C₃- bis C₁₀-Cycloalkyl oder C₆- bis C₁₅-Aryl,
- Z: für X oder 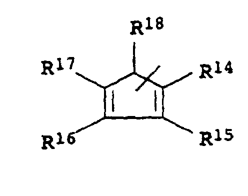 steht,
wobei die Reste
- R¹⁴ bis R¹⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
- R¹⁹: C₁- bis C₁₀-Alkyl, C₆- bis C₁₅-Aryl oder C₃- bis C₁₀-Cycloalkyl,
oder wobei die Reste R¹¹ und Z gemeinsam eine Gruppierung -R²⁰-A-bilden, in der
- R²⁰: 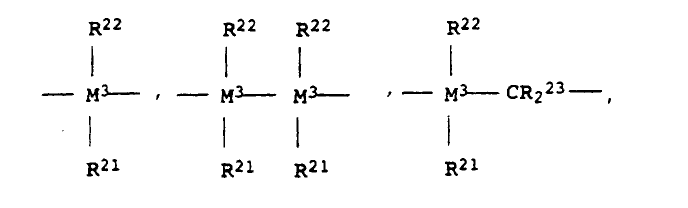 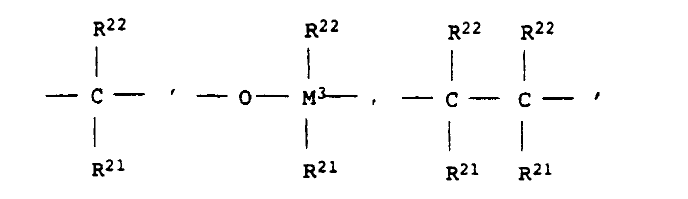 = BR²², = AlR²², -Ge-, -Sn-, -O-, -S-, = SO, = SO₂, = NR²², = CO, = PR²² oder = P(O)R²² ist,
- wobei R²¹, R²² und R²³: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M³: Silicium, Germanium oder Zinn ist,
- A: ―O―, ―S―, 〉NR²⁴ oder 〉PR²⁴ bedeuten, mit
- R²⁴: C₁- bis C₁₀-Alkyl, C₆- bis C₁₅-Aryl, C₃- bis C₁₀-Cycloalkyl, Alkylaryl oder Si(R²⁵)₃,
- R²⁵: wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R¹¹ und R¹⁷ gemeinsam eine Gruppierung -R²⁰-bilden.

Von den Metallocenkomplexen der allgemeinen Formel III sind 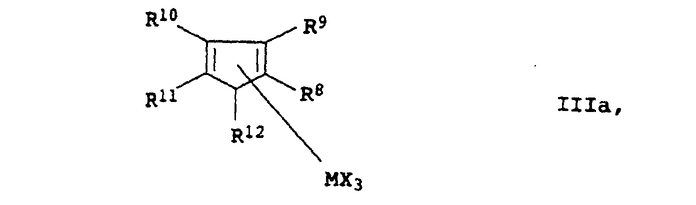 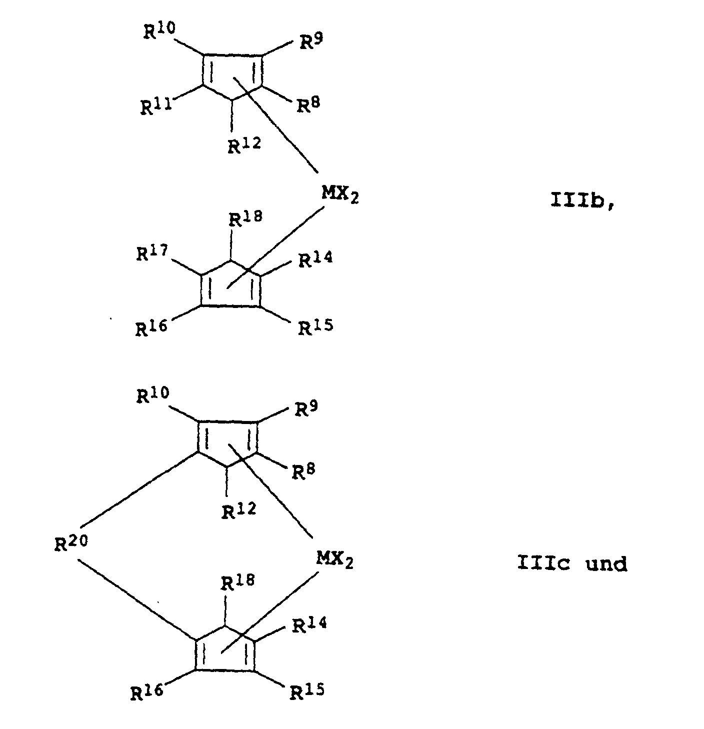 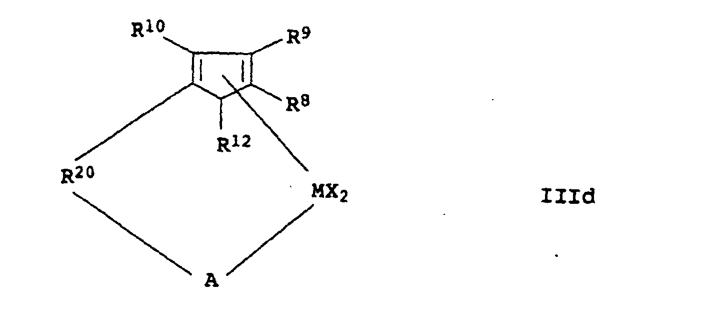 bevorzugt.

Die Reste X können gleich oder verschieden sein, bevorzugt sind sie gleich.

Von den Verbindungen der Formel IIIa sind insbesondere diejenigen bevorzugt, in denen
- M: Titan, zirkonium oder Hafnium,
- X: Halogen, insbesondere Chlor und
- R⁸ bis R¹²: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: für Halogen, insbesondere Chlor,
- R⁸ bis R¹²: wasserstoff, C₁- bis C₄-Alkyl oder Si(R¹³)₃,
- R¹⁴ bis R¹⁸: wasserstoff, C₁- bis C₄-Alkyl oder Si(R¹⁹)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid.
Bis(indenyl)-zirkoniumdichlorid
Bis(tetrahydroindenyl)-zirkoniumdichlorid
Bis(benzindenyl)-zirkoniumdichlorid
Bis(2-methylbenzindenyl)-zirkoniumdichlorid

Von den Verbindungen der Formel IIIc sind diejenigen besonders geeignet, in denen
- R⁸ und R¹⁴: gleich sind und für Wasserstoff oder C₁- bis C₁₀-Alkylgruppen stehen,
- R¹² und R¹⁸: gleich sind und für wasserstoff, eine Methyl-, Ethyl-, iso-Propyl- oder tert.-Butylgruppe stehen
- R⁹, R¹⁰, R¹⁵ und R¹⁶: die Bedeutung
R¹⁰ und R¹⁶ C₁- bis C₄-Alkyl
R⁹ und R¹⁵ Wasserstoff
haben oder zwei benachbarte Reste R⁹ und R¹⁰ sowie R¹⁵ und R¹⁶ gemeinsam für 4 bis 12 C-Atome aufweisende cyclische Gruppen stehen,
- R²⁰: für 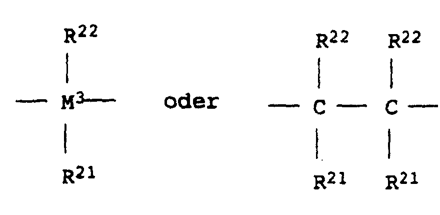 steht,
- M: für Titan, Zirkonium oder Hafnium und
- X: für Halogen, insbesondere für Chlor stehen.
Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(3-tert.butyl-5-methylcyclopentadienyl)-zirkoniumdichlorid, Dimethylsilandiylbis(3-tert.butyl-5-ethylcyclopentadienyl)-zirkoniumdichlorid, Dimethylsilandiylbis(2-methylindenyl)-zirkoniumdichlorid, Dimethylsilandiylbis(2-isopropylindenyl)-zirkoniumdichlorid, Dimethylsilandiylbis(2-tert.butylindenyl)-zirkoniumdichlorid, Diethylsilandiylbis(2-methylindenyl)-zirkoniumdibromid, Dimethylsilandiylbis(3-methyl-5-methylcyclopentadienyl)-zirkoniumdichlorid, Dimethylsilandiylbis(3-ethyl-5-isopropylcyclopentadienyl)-zirkoniumdichlorid, Dimethylsilandiylbis (2-methylindenyl) -zirkoniumdichlorid, Dimethylsilandiylbis(2-methylbenzindenyl)-zirkoniumdichlorid und Dimethylsilandiylbis(2-methylindenyl)-hafniumdichlorid.

Bei den Verbindungen der allgemeinen Formel IIId sind als besonders geeignet diejenigen zu nennen, in denen
- M: für Titan oder Zirkonium,
- X: für Halogen, insbesondere für Chlor stehen,
- R²⁰: für 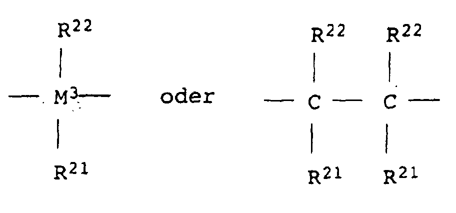 steht,
- A: für ―O― , ―S― , 〉NR²⁴
und
- R⁸ bis R¹⁰ und R¹²: für Wasserstoff, C₁- bis C₁₀-Alkyl, C₃- bis C₁₀-Cycloalkyl, C₆- bis C₁₅-Aryl oder Si(R¹⁴)₃ stehen, oder wobei zwei benachbarte Reste für 4 bis 12 C-Atome aufweisende cyclische Gruppen stehen.

Besonders bevorzugt ist ein erfindungsgemäßes Verfahren, bei welchem man als Metallocenkomplex ein Zirkonkomplex einsetzt. Weiterhin sind Metallocenverbindungen in ihrer Metallocendihalogenid-Form bevorzugt.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of organometallic Chemistry, 369 (1989), 359-370 beschrieben.

Es können auch Mischungen verschiedener Metallocenkomplexe eingesetzt werden.

Metalloceniumionenbildende Verbindungen sind Koordinationskomplexverbindungen, ausgewählt aus der Gruppe der starken, neutralen Lewissäuren, der ionischen Verbindungen mit lewissauren Kationen und der ionischen Verbindungen mit Brönsted-Säuren als Kation.

Als starke, neutrale Lewissäuren sind Verbindungen der allgemeinen Formel IV

M⁴X¹X²X³ IV

bevorzugt, in der
- M⁴: ein Element der III. Hauptgruppe des Periodensystems bedeutet, insbesondere B, Al oder Ga, vorzugsweise B,
- X¹, X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Als bevorzugt sind als metalloceniumionenbildende Verbindungen an den aromatischen Ringen substituierte Bor-Aryl-Verbindungen zu nennen.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex III.

Der Metallocenkomplex und die metalloceniumionenbildende Verbindung werden nun mit der Suspension des wie oben hergestellten vorbehandelten Trägermaterials umgesetzt. Bevorzugt werden dabei der Metallocenkomplex und die metalloceniumionenbildende Verbindung zu der Suspension gegeben. Eine Menge von 0,01 bis 10 Gew.-% an Metallocenkomplex, bezogen auf das anorganische Trägermaterial ist besonders geeignet. Die Bedingungen für diese Umsetzung sind ebenfalls nicht kritisch, Temperaturen im Bereich von 20 bis 100°C und Reaktionszeiten im Bereich von 0,1 bis 20 Stunden haben sich als besonders geeignet erwiesen.

Das so erhaltene Material kann nun beispielsweise durch Entfernen des Lösungsmittels im Vakuum isoliert werden.

Wurde als Metallocenkomplex eine Metallocenverbindung eingesetzt, die neben den substituierten oder unsubstituierten Cyclopentadienylliganden noch Halogenatome als Liganden des Metallatoms tragen, so liegt das Katalysatorsystem nach diesem Verfahrensschritt in der Regel noch nicht in voll aktiver Form vor.

Besonders für den Fall, daß man als Metallocenkomplex eine Metallocenverbindung in ihrer Metallocendihalogenid-Form einsetzt, führt man nach der Umsetzung mit dieser Metallocenverbindung und der metalloceniumbildenden Verbindung in einem nachfolgenden Schritt eine Umsetzung mit einer Metallverbindung der allgemeinen Formel II

M²(R⁵)ₒ(R⁶)ₚ(R⁷)_{q} II

durch, in der
- M²: ein Alkali-, ein Erdalkalimetall, Zink oder ein Metall der III. Hauptgruppe des Periodensystems, d.h. Bor, Aluminium, Gallium, Indium oder Thallium bedeutet,
- R⁵: Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
- R⁶ und R⁷: Wasserstoff, Halogen, C₁- bis C₁₀-Alkyl, C₆- bis C₁₅-Aryl, Alkylaryl, Arylalkyl, Aryloxy oder Alkoxy mit jeweils 1 bis 10 C-Atomen im Alkylrest und 6 bis 20 C-Atomen im Arylrest,
- o: eine ganze Zahl von 1 bis 3
und
- p und q: ganze Zahlen von 0 bis 2 bedeuten, wobei die Summe o+p+q der Wertigkeit von M² entspricht.

Dabei sind diejenigen Verbindungen bevorzugt, in denen
- M²: Lithium, Magnesium oder Aluminium bedeutet und
- R⁵ bis R⁷: für C₁- bis C₁₀-Alkyl stehen.

Besonders bevorzugte Metallverbindungen der allgemeinen Formel II sind n-Butyl-Lithium, n-Butyl-n-octyl-Magnesium, n-Butyl-n-heptyl-Magnesium und besonders Aluminiumalkyle wie Tri-n-hexyl-aluminium.

Der Aktivierungsschritt mit der Verbindung der allgemeinen Formel II kann zu einem beliebigen Zeitpunkt, d.h. vor oder nach der Dosierung des geträgerten Katalysatorsystems in den Polymerisationsreaktor, erfolgen. Vorzugsweise erfolgt die Aktivierung erst im Reaktor.

Die Bedingungen für die Umsetzung mit der Verbindung II sind an sich unkritisch. Temperaturen, Reaktionszeiten und Drücke richten sich nach dem Zeitpunkt der Umsetzung, d.h. Aktivierung.

Mit Hilfe dieser erfindungsgemäß hergestellten geträgerten Katalysatorsysteme lassen sich Polyolefine, insbesondere Polymerisate von Alk-1-enen herstellen. Darunter werden Homo- und Copolymerisate von C₂- bis C₁₀-Alk-l-enen verstanden, wobei als Monomere vorzugsweise Ethylen, Propylen, But-l-en, Pent-l-en und Hex-l-en verwendet werden.

Aber auch Cycloolefine oder höhere Alk-1-ene sowie generell Alkene lassen sich als Monomere zur Homo- oder Copolymerisation einsetzen.

Die erfindungsgemäß hergestellten geträgerten Katalysatorsysteme zeichnen sich insbesondere durch eine hohe Aktivität aus, sie sind zu einem beliebigen Zeitpunkt aktivierbar, können lange gelagert werden, sind nicht pyrophor und somit leicht handhabbar.

### Beispiele

### Herstellung der Katalysatoren:

50 ml einer Triisobutylaluminium-(Tibal)-Lösung (Konzentration der Lösungen: siehe Tabelle 1) in Toluol wurden in einem mit Stickstoff gespülten 250 ml-Kolben vorgelegt. Dazu wurden unter rühren 10 g Kieselgel (ES 70X, Hersteller: Fa. Crosfield, bei 150°C für 7 h im Vakuum getrocknet) gegeben. Dabei stieg die Temperatur der Lösung nicht über 40°C an. Anschließend wurde das Reaktionsgemisch für 30 min auf 80°C erwärmt. Unter Rühren wurden dann 400 mg (0,5 mmol) Dimethylanilinium-tetrakis-pentafluorphenylborat und 200 mg (0,5 mmol) bis-n-Butylcyclopentadienylzirkoniumdichlorid zugegeben. Es wurde 1 h bei 80°C gerührt, und dann, nach dem Abkühlen, das Lösungsmittel im Vakuum entfernt. Der Katalysator wurde als gut rieselfähiges Pulver erhalten.

### Ethylen-Hexen-Copolymerisationen:

In einem gerührten 1 l-Stahlautoklaven wurden nach sorgfältigem Spülen mit Stickstoff und Temperieren auf die Polymerisationstemperatur von 70°C 450 ml iso-Butan, 40 ml Hexen und 80 mg Aluminiumtriethyl (als Lösung in Heptan) vorgelegt. Dann wurden ca. 50 mg des geträgerten Katalysators mit weiteren 50 ml iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Das Polymerisat fiel in Form eines gut rieselfähigen Grießes an. Nähere Angaben können Tabelle 1 entnommen werden.

Die folgende Tabelle 1 zeigt die Eigenschaften von Katalysatoren, die mit unterschiedlichen Mengenverhältnissen von Triisobutylaluminium (Tibal) als Verbindung I zum Trägermaterial (SiO₂) hergestellt wurden. Als Testparameter dienten die Produktivität und die Viskosität des Polymers, gemessen nach ISO 1628-3. Es zeigt sich, daß eine Variation der Tibal-Menge keine signifikante Auswirkung auf die Viskosität und damit auf das Molekulargewicht des Polymerproduktes hat. Lediglich zum Erzielen einer optimalen Produktivität sollte das Tibal-Träger-Verhältnis in vernünftigen Grenzen gehalten werden. In einem breiten Mengenverhältnisbereich können Katalysatoren mit sehr guter Produktivität erhalten werden.

**Tabelle 1:**

| Polymerisationen mit den erfindungsgemäßen Katalysatoren | | | | | |
|---|---|---|---|---|---|
| Bsp. | Konzentration Tibal-Lösung (mol/l] | mMol Tibal / g SiO₂ | Beladung des Katalysators mit Metallocenkomplex [µmol /g] | Produktivität [gPE/ g Katalysator] | Viskosität des Polymers [dl/g] |
| 1 | 0,15 | 0,75 | 41,3 | 3300 | 2,49 |
| 2 | 0,185 | 0,92 | 42,7 | 5000 | 2,28 |
| 3 | 0,20 | 1,00 | 43,8 | 6700 | 2,35 |
| 4 | 0,235 | 1,17 | 44,6 | 6300 | 2,48 |
| 5 | 0,28 | 1,40 | 45,0 | 5000 | 2,43 |

## Patentansprüche

1. Verfahren zur Herstellung eines geträgerten Katalysatorsystems, wobei man in einem ersten Schritt ein organisches oder anorganisches Trägermaterial in Gegenwart eines inerten Lösungsmittels mit einer Metallverbindung der allgemeinen Formel I
M¹(R¹)ᵣ(R²)ₛ(R³)ₜ(R⁴)ᵤ I
in der
M¹ ein Alkali-, ein Erdalkalimetall oder ein Metall der III. oder IV. Hauptgruppe des Periodensystems bedeutet,
R¹ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R² bis R⁴ Wasserstoff, Halogen, C₁- bis C₁₀-Alkyl, C₆- bis C₁₅-Aryl, Alkylaryl, Arylalkyl, Alkoxy, Aryloxy oder Dialkylamino mit jeweils 1 bis 10 C-Atomen im Alkylrest und 6 bis 20 C-Atomen im Arylrest,
r eine ganze Zahl von 1 bis 4
und
s, t und u ganze Zahlen von 0 bis 3 bedeuten, wobei die Summe r+s+t+u der Wertigkeit von M¹ entspricht,
umsetzt und in einem folgenden Schritt die so erhaltene Suspension mit einem Metallocenkomplex der allgemeinen Formel III: 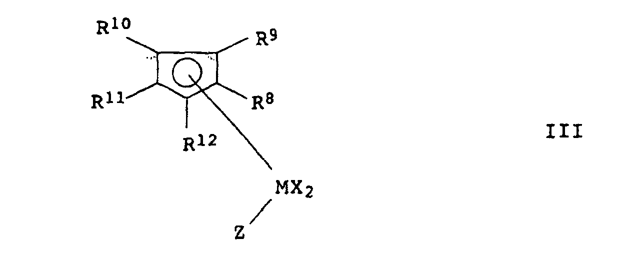 in der die Substituenten folgende Bedeutung haben:
M Titan, Zirkonium, Hafnium, Vanadium, Niob oder Tantal,
X Fluor, Chlor, Brom, Iod, Wasserstoff oder C₁-bis C₁₀-Alkyl,
R⁸ bis R¹² Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können oder Si(R¹³)₃ mit
R¹³ C₁- bis C₁₀-Alkyl, C₃- bis C₁₀-Cycloalkyl oder C₆bis C₁₅-Aryl,
Z für X oder 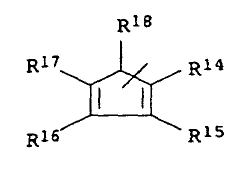 steht,
wobei die Reste
R¹⁴ bis R¹⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
R¹⁹ C₁- bis C₁₀-Alkyl, C₆- bis C₁₅-Aryl oder C₃- bis C₁₀-Cycloalkyl,
oder wobei die Reste R¹¹ und Z gemeinsam eine Gruppierung - R²⁰-A- bilden, in der
R²⁰ 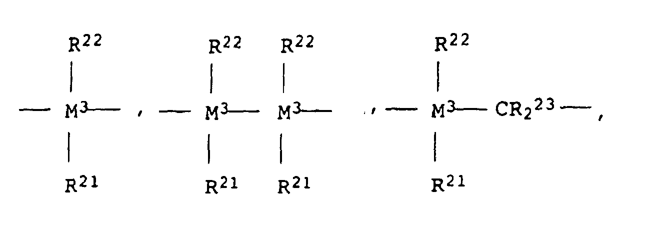 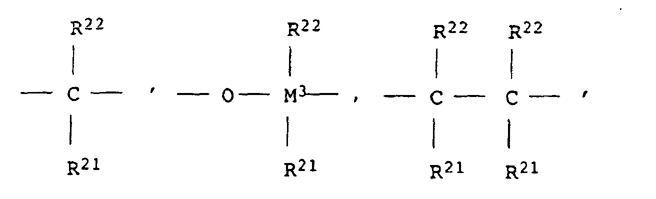 = BR²², = AlR²², -Ge-, -Sn-, -O-, -S-, = SO, - SO₂, = NR²², = CO, = PR²² oder = P(O)R²² ist,
wobei R²¹, R²² und R²³ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₂₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M³ Silicium, Germanium oder Zinn ist,
A ―O―,―S―, 〉NR²⁴ oder 〉PR²⁴ bedeuten, mit
R²⁴ C₁- bis C₁₀-Alkyl, C₆- bis C₁₅-Aryl, C₃- bis C₁₀-Cycloalkyl, Alkylaryl oder Si(R²⁵)₃,
R²⁵ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R¹¹ und R¹⁷ gemeinsam eine Gruppierung - R²⁰- bilden,
und einer metalloceniumionenbildenden Verbindung, welche eine Koordinationskomplexverbindung ausgewählt aus der Gruppe der starken, neutralen Lewissäuren, der ionischen Verbindungen mit lewissauren Kationen und der ionischen Verbindungen mit Brönsted-Säuren als Kationen ist, umsetzt, welches Verfahren **dadurch gekennzeichnet ist, daß** man nach dem ersten Schritt das Lösungsmittel nicht entfernt und ohne Isolierung des so erhaltenen vorbehandelten Trägermaterials den folgenden Schritt durchführt.

2. Verfahren nach Anspruch 1, **dadurch gekennzeichnet, daß** man als anorganisches Trägermaterial Kieselgel einsetzt.

3. Verfahren nach Anspruch 1 oder 2, **dadurch gekennzeichnet, daß** in der allgemeinen Formel I M¹ für Aluminium, die Reste R¹ bis R³ für C₁- bis C₁₀-Alkyl und u für Null stehen.

4. Verfahren nach den Ansprüchen 1 bis 3, **dadurch gekennzeichnet, daß** man als Metallocenkomplex einen Zirkoniumkomplex einsetzt.

5. Verfahren nach den Ansprüchen 1 bis 4, **dadurch gekennzeichnet, daß** man als Metallocenkomplex eine Metallocenverbindung in ihrer Metallocendihalogenidform einsetzt.

6. Verfahren nach den Ansprüchen 1 bis 5, **dadurch gekennzeichnet, daß** man als metalloceniumionenbildenden Verbindung eine an den aromatischen Ringen substituierte Bor-Aryl-Verbindung einsetzt.

7. Verfahren nach den Ansprüchen 1 bis 6, **dadurch gekennzeichnet, daß** man nach der Umsetzung des vorbehandelten Trägermaterials mit dem Metallocenkomplex und der metalloceniumionenbildenden Verbindung das Lösungsmittel entfernt.

8. Verfahren nach den Ansprüchen 1 bis 7, **dadurch gekennzeichnet, daß** man für den Fall, daß man als Metallocenkomplex eine Metallocenverbindung in ihrer Metallocendihalogenidform einsetzt, nach der Umsetzung mit dieser Metallocenverbindung und der metalloceniumionenbildenden Verbindung in einem nachfolgenden Schritt eine Umsetzung mit einer Metallverbindung der allgemeinen Formel II
M²(R⁵)ₒ(R⁶)ₚ(R⁷)_{q} II
durchführt, in der
M² ein Alkali-, ein Erdalkalimetall, Zink oder ein Metall der III. Hauptgruppe des Periodensystems bedeutet,
R⁵ Wasserstoff, C₁- bis C₁₀-Alkyl, C₆- bis C₁₅-Aryl, Alkylaryl oder Arylalkyl mit jeweils 1 bis 10 C-Atomen im Alkylrest und 6 bis 20 C-Atomen im Arylrest,
R⁶ und R⁷ Wasserstoff, Halogen, C₁- bis C₁₀-Alkyl, C₆- bis C₁₅-Aryl, Alkylaryl, Arylalkyl, Aryloxy oder Alkoxy mit jeweils 1 bis 10 C-Atomen im Alkylrest und 6 bis 20 C-Atomen im Arylrest,
o eine ganze Zahl von 1 bis 3
und
p und q ganze Zahlen von 0 bis 2 bedeuten, wobei die Summe o+p+q der Wertigkeit von M² entspricht.

9. Verfahren nach Anspruch 8, **dadurch gekennzeichnet, daß** man als Metallverbindung der allgemeinen Formel II ein Aluminiumalkyl einsetzt.

## Claims

1. A process for the preparation of a supported catalyst system, an organic or inorganic carrier material being reacted in a first step with a metal compound of the formula I
M¹(R¹)ᵣ(R²)ₛ(R³)ₜ(R⁴)ᵤ I
where
M¹ is an alkali metal, an alkaline earth metal or a metal of main group III or IV of the Periodic Table,
R¹ is hydrogen, C₁-to C₁₀-alkyl, C₆- to C₁₅-aryl, alkylaryl or arylalkyl, each having 1 to 10 carbon atoms in the alkyl radical and 6 to 20 carbon atoms in the aryl radical,
R² to R⁴ are each hydrogen, halogen, C₁- to C₁₀-alkyl, C₆- to C₁₅-aryl, alkylaryl, arylalkyl, alkoxy, aryloxy or dialkylamino, each having 1 to 10 carbon atoms in the alkyl radical and 6 to 20 carbon atoms in the aryl radical,
r is an integer from 1 to 4
and
s, t and u are each an integer from 0 to 3, the sum r+s+t+u corresponding to the valency of M¹,
in the presence of an inert solvent and, in a subsequent step, the suspension thus obtained being reacted with a metallocene complex of the formula III: 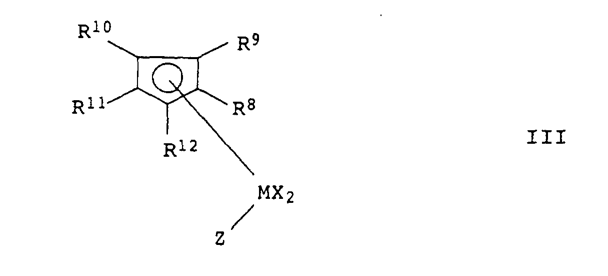 where
M is titanium, zirconium, hafnium, vanadium, niobium or tantalum,
X is fluorine, chlorine, bromine, iodine, hydrogen or C₁- to C₁₀-alkyl,
R⁸ to R¹² are each hydrogen, C₁- to C₁₀-alkyl, 5- to 7-membered cycloalkyl, which in turn may carry C₁- to C₁₀-alkyl as a substituent, C₆- to C₁₅-aryl or aralkyl, it also being possible for two neighboring radicals together to be a cyclic group of 4 to 15 carbon atoms, or Si(R¹³)₃,
R¹³ is C₁- to C₁₀-alkyl, C₃- to C₁₀-cycloalkyl or C₆- to C₁₅-aryl,
Z is X or 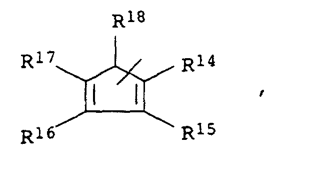
R¹⁴ to R¹⁸ are each hydrogen, C₁- to C₁₀-alkyl, 5- to 7-membered cycloalkyl, which in turn may carry C₁- to C₁₀-alkyl as substituent, C₆- to C₁₅-aryl or aralkyl, it also being possible for two neighboring radicals together to be a cyclic group of 4 to 15 carbon atoms, or Si(R¹⁹)₃, and
R¹⁹ is C₁- to C₁₀-alkyl,C₆- to C₁₅-aryl or C₃- to C₁₀-cycloalkyl,
or R¹¹ and Z together form a group -R²⁰-A-, in which
R²⁰ is 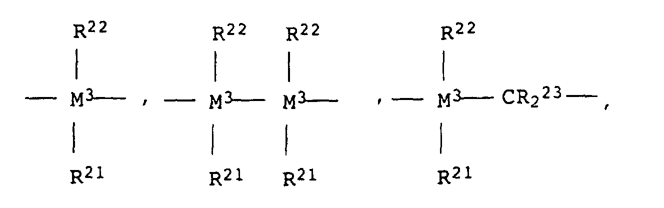 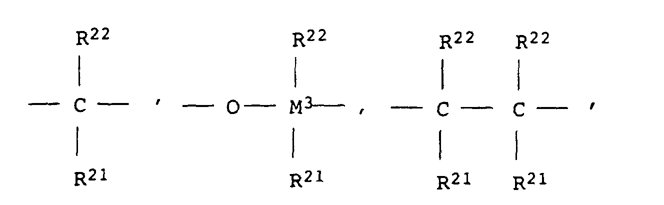 = BR²², = AlR²², -Ge-, -Sn-, -O-, -S-, = SO, - SO₂, = NR²², = CO, = PR²² or = P(O)R²²,
R²¹, R²² and R²³ are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl or C₇-C₄₀-alkylaryl, or two neighboring radicals, together with the atoms linking them, form a ring,
M³ is silicon, germanium or tin,
A is ―O―, ―S―, 〉NR²⁴ or 〉PR²⁴ ,
R²⁴ is C₁- to C₁₀-alkyl, C₆- to C₁₅-aryl, C₃- to C₁₀-cycloalkyl, alkylaryl or Si(R²⁵)₃, and
R²⁵ is hydrogen, C₁- to C₁₀-alkyl, C₆- to C₁₅-aryl, which in turn may be substituted by C₁- to C₄-alkyl, or C₃- to C₁₀-cycloalkyl
or R¹¹ and R¹⁷ together form a group -R²⁰-,
and with a compound which forms metallocenium ions and which is a coordination complex compound selected from the group consisting of the strong, neutral Lewis acids, the ionic compounds having Lewis acid cations and the ionic compounds having Brönsted acids as cations, in which process the solvent is not removed after the first step and the subsequent step is carried out without isolation of the pretreated carrier material thus obtained.

2. A process as claimed in claim 1, wherein the inorganic carrier material used is silica gel.

3. A process as claimed in claim 1 or 2, wherein, in the formula I, M¹ is aluminum, R¹ to R³ are each C₁- to C₁₀-alkyl and u is zero.

4. A process as claimed in any of claims 1 to 3, wherein the metallocene complex used is a zirconium complex.

5. A process as claimed in any of claims 1 to 4 wherein the metallocene complex used is a metallocene compound in its metallocene dihalide form.

6. A process as claimed in any of claims 1 to 5, wherein an aryl-boron compound substituted on the aromatic rings is used as the compound forming metallocenium ions.

7. A process as claimed in any of claims 1 to 6, wherein the solvent is removed after the reaction of the pretreated carrier material with the metallocene complex and the compound forming metallocenium ions.

8. A process as claimed in any of claims 1 to 7, wherein, if the metallocene complex used is a metallocene compound in its metallocene dihalide form, the reaction with this metallocene compound and the compound forming metallocenium ions is followed by a reaction with a metal compound of the formula II
M²(R⁵)ₒ(R⁶)ₚ(R⁶)_{q} II
where
M² is an alkali metal, an alkaline earth metal, zinc or a metal of main group III of the Periodic Table,
R⁵ is hydrogen, C₁- to C₁₀-alkyl, C₆- to C₁₅-aryl, alkylaryl or arylalkyl, each having 1 to 10 carbon atoms in the alkyl radical and 6 to 20 carbon atoms in the aryl radical,
R⁶ and R⁷ are each hydrogen, halogen, C₁- to C₁₀-alkyl, C₆- to C₁₅-aryl, alkylaryl, arylalkyl, aryloxy or alkoxy, each having 1 to 10 carbon atoms in the alkyl radical and 6 to 20 carbon atoms in the aryl radical,
o is an integer from 1 to 3
and
p and q are each an integer from 0 to 2, the sum o+p+q corresponding to the valency of M².

9. A process as claimed in claim 8, wherein an aluminum alkyl is used as the metal compound of the formula II.

## Revendications

1. Procédé pour la préparation d'un système de catalyseur sur support, dans lequel on fait réagir dans une première étape une matière support organique ou inorganique en présence d'un solvant inerte avec un composé de métal de formule générale I
M¹(R¹)ᵣ(R²)ₛ(R³)ₜ(R⁴)ᵤ I
dans laquelle
M¹ désigne un métal alcalin ou alcalino-terreux du groupe principal III ou IV de la classification périodique des éléments,
R¹ représente l'hydrogène, un alkyle en C₁ à C₁₀, un aryle en C₆ à C₁₅, un alkylaryle ou un arylalkyle; ayant à chaque fois 1 à 10 atomes de carbone dans le reste alkyle et 6 à 20 atomes de carbone dans le reste aryle,
R² à R⁴ représentent l'hydrogène, un halogène, un alkyle en C₁ à C₁₀, un aryle en C₆ à C₁₅, un alkylaryle, un arylalkyle, un alcoxy, un aryloxy ou un dialkylamino, ayant à chaque fois 1 à 10 atomes de carbone dans le reste alkyle et 6 à 20 atomes de carbone dans le reste aryle,
r un nombre entier de 1 à 4
et
s, t et u désignent des nombres entiers de 0 à 3, tandis que la somme r+s+t+u correspond à la valence de M¹,
et dans une étape subséquente on fait réagir la suspension ainsi obtenue avec un complexe de métallocène de formule générale III: 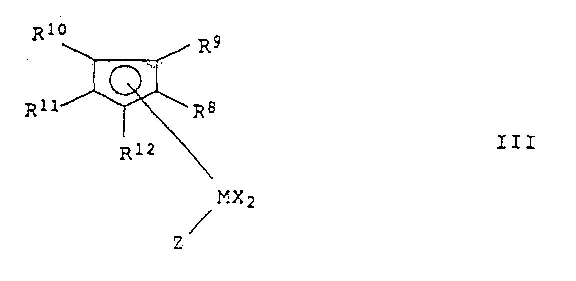 dans laquelle les substituants ont la signification suivante:
M titane, zirconium, hafnium, vanadium, niobium ou tantale,
X fluor, chlore, brome, iode, hydrogène ou alkyle en C₁ à C₁₀ ,
R⁸ à R¹² hydrogène, alkyle en C₁ à C₁₀, cycloalkyle ayant 5 à 7 chaînons, qui à son tour peut porter un alkyle en C₁ à C₁₀ comme substituant, aryle en C₆ à C₁₅ ou arylalkyle, tandis qu'éventuellement également deux restes voisins peuvent former ensemble des groupes cycliques présentant 4 à 15 atomes de carbone, ou Si(R¹³)₃ avec
R¹³ désignant un alkyle en C₁ à C₁₀, un cycloalkyle en C₃ à C₁₀ ou un aryle en C₆ à C₁₅,
Z représente X ou 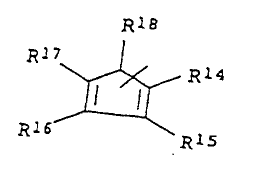
tandis que les restes
R¹⁴ à R¹⁸ désignent l'hydrogène, un alkyle en C₁ à C₁₀, un cycloalkyle ayant 5 à 7 chaînons, qui peut à son tour porter un alkyle en C₁ à C₁₀ comme substituant, un aryle en C₆ à C₁₅ ou un arylalkyle, et tandis qu'éventuellement également deux restes voisins peuvent former ensemble des groupes cycliques présentant 4 à 15 atomes de carbone, ou Si(R¹⁹)₃ avec
R¹⁹ désignant un alkyle en C₁ à C₁₀, un aryle en C₆ à C₁₅ ou un cycloalkyle en C₃ à C₁₀,
ou tandis que les restes R¹¹ et Z forment ensemble un groupement R²⁰-A-, dans lequel
R²⁰ est 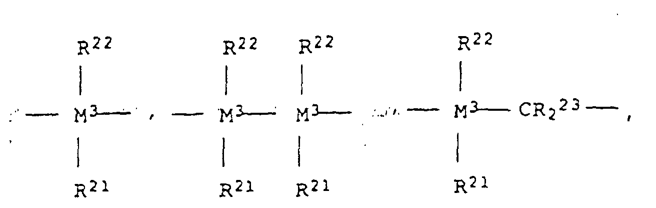 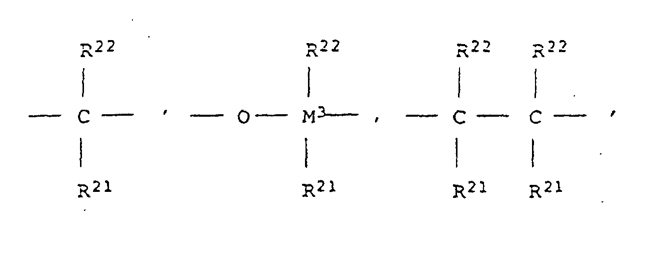 =BR²², =AlR²², -Ge-, -Sn-, -O-, -S-, =SO, =SO₂, =NR²², =CO, =PR²² ou P(O)R²²,
tandis que R²¹, R²² et R²³ sont identiques ou différents et désignent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou tandis que deux restes voisins peuvent former à chaque fois un cycle avec les atomes les reliant, et
M³ est le silicium, le germanium ou l'étain,
A désigne ―O―, ―S―, 〉NR²⁴ ou 〉PR²⁴,
R¹⁴ représente un alkyle en C₁ à C₁₀, un aryle en C₆ à C₁₅, un cycloalkyle en C₃ à C₁₀, un alkylaryle ou Si(R²⁵)₃,
R²⁵ désigne l'hydrogène, un alkyle en C₁-C₁₀, un aryle en C₆-C₁₅, qui peut à son tour être substitué par des groupes alkyle en C₁-C₄, ou un cycloalkyle en C₃-C₁₀,
ou tandis que les restes R¹¹ et R¹⁷ forment ensemble un groupement -R²⁰-,
et un composé formant des ions métallocénium, qui est un composé de complexe de coordination choisi dans le groupe des acides de Lewis neutres, forts, des composés ioniques avec des cations d'acide de Lewis, et des composés ioniques avec des acides de Brönsted en tant que cations,
lequel procédé est **caractérisé par le fait qu'**on n'élimine pas le solvant après la première étape et qu'on effectue l'étape subséquente sans isolement de la matière support prétraitée ainsi obtenue.

2. Procédé selon la revendication 1, **caractérisé par le fait qu'**on met en oeuvre du gel de silice comme matière support inorganique.

3. Procédé selon la revendication 1 ou 2, **caractérisé par le fait que** dans la formule générale I M¹ désigne l'aluminium, les restes R¹ à R³ représentent un alkyle en C₁ à C₁₀ et u vaut zéro.

4. Procédé selon les revendications 1 à 3, **caractérisé par le fait qu'**on met en oeuvre comme complexe de métal un complexe de zirconium.

5. Procédé selon les revendications 1 à 4, **caractérisé par le fait qu'**on met en oeuvre comme complexe de métal un composé de métallocène sous sa forme dihalogénure de métallocène.

6. Procédé selon les revendications 1 à 5, **caractérisé par le fait qu'**on met en oeuvre comme composé formant des ions métallocénium un composé de bore-aryle substitué sur les cycles aromatiques.

7. Procédé selon les revendications 1 à 6, **caractérisé par le fait qu'**on élimine le solvant après la réaction de la matière support prétraitée avec le complexe de métal et du composé formant des ions métallocénium.

8. Procédé selon les revendications 1 à 7, **caractérisé par le fait que**, dans le cas où on met en oeuvre en tant que complexe de métal un composé de métallocène sous sa forme dihalogénure de métallocène, on effectue après la réaction avec ce composé de métallocène et le composé formant des ions métallocénium dans une étape subséquente une réaction avec un composé de métal de formule générale II
M²(R⁵)ₒ(R⁶)ₚ(R⁷)_{q} II
dans laquelle
M² désigne un métal alcalin, un métal alcalino-terreux, le zinc ou un métal du groupe principal III de la classification périodique des éléments,
R⁵ représente l'hydrogène, un alkyle en C₁ à C₁₀, un aryle en C₆ à C₁₅, un alkylaryle ou un arylalkyle, ayant à chaque fois 1 à 10 atomes de carbone dans le reste alkyle et 6 à 20 atomes de carbone dans le reste aryle,
R⁶ et R⁷ désignent l'hydrogène, un halogène, un alkyle en C₁ à C₁₀, un aryle en C₆ à C₁₅, un alkylaryle, un arylalkyle, un aryloxy ou un alcoxy, ayant à chaque fois 1 à 10 atomes de carbone dans le reste alkyle et 6 à 20 atomes de carbone dans le reste aryle,
o est un nombre entier de 1 à 3
et
p et q désignent des nombres entiers de 0 à 2, tandis que la somme o+p+q correspond à la valence de M².

9. Procédé selon la revendication 8, **caractérisé par le fait qu'**on met en oeuvre en tant que composé de métal de formule générale II un aluminium-alkyle.
